# NEW EUROPEAN PATENT SPECIFICATION

(11) **EP 2 296 494 B2**
(45) Date of publication and mention of the opposition decision: **18.05.2022**
(45) Mention of the grant of the patent: 07.03.2012
(21) Application number: 09766866.9
(22) Date of filing: 15.06.2009
(51) Int. Cl.: A23L 1/29, A23L 1/30

(54) **INFANT MILK FORMULA WITH FAT GRADIENT**
ZUSAMMENSETZUNG MIT FETTGRADIENTEN
COMPOSITION AVEC GRADIENT GRAS

(30) Priority: 16.06.2008 EP 08158336; 02.09.2008 EP 08163478; 02.09.2008 US 93548 P
(43) Date of publication of application: 23.03.2011
(60) Divisional application: 12158097.1
(73) Proprietor: N.V. Nutricia, 2712 HM Zoetermeer (NL)
(72) Inventor: VAN BAALEN, Antonie, NL-6843 RC Arnhem (NL); VERDURMEN, Rudolph Eduardus Maria, NL-3571 JB Utrecht (NL); VAISMAN, Nachum, 76854 Israël (IL); BOEHM, Günther, 04107 Leipzig (DE)
(74) Representative: Nederlandsch Octrooibureau
(86) International application number: PCT/NL2009/050343
(87) International publication number: WO 2009/154448

(56) References cited:
- WO-A-2005/051091
- WO-A-2006/094995
- WO-A1-2005/051091
- WO-A1-2006/094995
- WO-A2-2007/097523
- US-A1- 2006 188 614
- US-A1- 2006 188 614
- DATABASE WPI Week 198447 Thomson Scientific, London, GB; AN 1984-293720 XP002505629 -& SU 1 084 006 A (A MED NUTRITION INS) 7 April 1984 (1984-04-07)
- MICHALSKI M C, BRIARD V, MICHEL F, TASSON F, POULAIN P: "Size distribution of fat globules in human colostrum," JOURNAL OF DAIRY SCIENCE, vol. 88, 2005, pages 1927-1940, XP002505628 cited in the application
- Whittlestone et al: "Variations in the fat content of human milk during suckling", , 1953,
- Michalski et al: J. Dairy Science, vol. 88, 2005, pages 1927-1940,
- Durand et al: Food Hydrocolloids, vol. 17, 2003, pages 671-678,
- Petrowski G.E.: "Emulsion stability and its relation to foods", ,
- 2006/141/EC
- Favé et al: Cellular and Mol. Biol, 2004, pages 815-831,
- McClements: Food emulsions, 2005,
- Schultz et al: Chem. Eng. Technol., vol. 27, 2004, pages 361-368,
- Am. J. of Clin. Nutr., 1984, pages 820-826,
- Rüegg et al: Biochem. et Biophys. Acta, 1981, pages 7-14,

## Description

### FIELD OF THE INVENTION

The present invention relates to a method for feeding infants. The present invention aims to mimic the concentration differences in fat which occur when an infant is breastfed.

### BACKGROUND OF THE INVENTION

When being breast fed, infants receive human milk wherein the fat concentration gradually increases during the feeding event. The hind-milk normally has a higher fat concentration compared to the fore-milk. Conventional infant milk formulae do not provide a fat gradient when being administered, i.e. the concentration of fat in the conventional infant milk formula is largely constant. Michalski et al (J. Dairy Sci 88:1927-1940 [2005] determined that in mature human milk, the fat globule diameter was 4 µm on average. Fat droplets in infant formula were much smaller than in human milk. It is desirable to mimic human breast milk feeding as closely as possible. Hence, there is a constant development towards bringing infant feeding closer to breast feeding. An important shortcoming of infant formula feeding is that administering the conventional products do not mimic the (fat) concentration differences which occur when the infant is breast fed.

US 2006/0188614 describes a method for feeding an infant by non-human milk including the steps of (a) feeding the infant by fore-milk equivalent having a volume of 30-60% of a total meal and a percentage of fat of 2.5-3.5%; and (b) feeding the infant by hind-milk equivalent having a volume of 40-70% of the total meal and a percentage of fat of 3.7-5.5%.

WO 2007/097523 describes a fat composition wherein fat globules provided by the fat composition have an average diameter of 0.1 to 1 micrometer.

WO 2005/051091 relates to a lipid combination which upon dispersion or emulsification in an essentially aqueous medium with other ingredients of infant formula, especially protein and carbohydrates under suitable conditions, forms a substantially homogenous dispersion or emulsion having a fat, globule-containing microstructure which is essentially mimetic of the corresponding globular microstructure of naturally occurring human milk fat (HMF), said globules having a membrane which is essentially mimetic of naturally occurring human milk fat globule membrane. Further described are methods for preparing the lipid combination, and various uses thereof, particularly uses related to the preparation of infant formulas. It also relates to substantially homogenous lipid preparations comprising a combination of glycerophospholipids being phosphatidylcholine (PC), phosphatidylethanolamine (PE), phosphatidylserine (PS) and phosphatidylinositol (PI), wherein the quantitative ratio between said glycerophospholipids essentially mimics their corresponding ratio in naturally occurring HMF, optionally further comprising sphingomyelin (SM) and/or cholesterol, wherein the quantitative ratio between the glycerophospholipids in said combination and the sphingomyelin and/or cholesterol essentially mimics their corresponding ratio in said naturally occurring HMF.

SU 1084006 discloses food emulsions for child and invalid feeding, which are made by dissolving water-soluble components in water, heating to form a paste, addition of starch, cooling, addition of egg and vegetable oil, emulsification, packaging and heat treatment. The food value of the emulsion is raised by rendering it more homogeneous. The preparation process yields fat globules of about 4 µm diameter, similar to human milk.

WO 2006/094995 discloses a process for preparing a nutritional composition including protein, fat and carbohydrate comprising emulsifying the fat in water with an emulsifier to form an emulsion having a solids content of at least 70%, homogenising the emulsion and extruding the emulsion together with a solid matrix comprising the protein and the carbohydrate in a ratio between 1 part emulsion: 0.5 parts matrix to 1 part emulsion:5 parts matrix into a vacuum chamber at a temperature at or above the melting point of the mixture of emulsion and matrix to obtain a solid product having a maximum water content of 10%.

### SUMMARY OF THE INVENTION

The present inventors found that the concentration differences which occur when the infant is breast fed, particularly the increase in fat concentration, can be mimicked without the need for mixing equipment (see for example US2006/0188614). It was found that when using a formula comprising larger fat droplet than those found in conventional infant formula, a fat gradient is formed within the liquid. Administering the present liquid composition having a fat gradient to the infant closely mimics breast feeding. Surprisingly, this effect was also observed when the formula prepared with large fat droplets was dried to a powder and subsequently reconstituted with water.

Conventional infant milk formula have fat droplets with a diameter at peak maximum of about 0.3-0.5 micrometer, as measured with the apparatus and method described in detail by Michalski et al (J. Dairy Sci 88:1927-1940 [2005] and Lait 81:787-796 [2001]). Due to these micronized fat globules the fat concentration in conventional liquid infant formula is relatively constant in a vertical direction. In the field of infant formula it is convention to have a homogenous formula with small fat droplets, in order to have a shelf-stable product which does not cream.

The present composition contains fat droplets with an increased diameter compared to standard infant milk formula. The fat droplets will "cream" due to the differences in densities between the fat and water. This will result in an increased fat concentration in the upper part of the container compared to the lower part of the container. Hence, within the present liquid composition, the fat concentration will differ in the vertical direction of the container. Keeping the container, e.g. bottle "upside down" (teat down), the fat concentration in the upper part of the container will be higher than in the lower part. Consequently, when drinking, the infant will first ingest the part of the formula with a lower concentration of fat. Towards the end of feeding, the fat concentration will increase, thereby mimicking the concentration differences, in particular of fat, which occur when the infant is breast fed. The inventors believe that this difference in kinetics of fat intake influences the kinetics of gastric emptying of fat, fat digestion and/or fat absorption in the infant. Therefore mimicking the fat gradient intake as observed in breast feeding beneficially affects the utilization of dietary fat and hence the development of infants.

A sufficient quantity of large, or larger, fat droplets preferably is achieved by low intensity homogenization.

### DETAILD DESCRIPTION OF PREFERRED EMBODIMENTS

It was an object of the present invention to provide a composition that is suitable as an infant milk formula and that has a fat gradient when it is fed to infants. The present invention thus concerns a method for feeding an infant, comprising administering a single liquid composition comprising vegetable fat, protein and carbohydrate, wherein the concentration ratio of fat in the upper 10 volume% : lower 10 volume% of the liquid composition is above 1. In one embodiment the concentration ratio of fat in the upper 10 volume% : lower 10 volume% of the liquid composition is above 1 and at least 15 wt.% to less than 50 wt.% of the total amount of fat droplets have a diameter of 5-25 micrometer.

Also in one embodiment the present invention concerns a method for feeding an infant, comprising administering a liquid composition comprising vegetable fat, protein and carbohydrate, wherein at least 15 wt.% to less than 50 wt.% of the total amount of fat droplets have a diameter of 5-25 micrometer to said infant.

The present method for feeding an infant is considered to be a non-therapeutic method.
Alternatively however, the present invention can be worded as the use of vegetable fat, protein and carbohydrate for the preparation of a single liquid composition wherein the concentration ratio of fat in the upper 10 volume% : lower 10 volume% of the single liquid composition is above 1, for feeding an infant.
Also the invention can be worded as the use of fat, protein and carbohydrate for the preparation of a liquid composition wherein at least 15 wt.% to less than 50 wt.% of the total amount of fat droplets have a diameter of 5-25 micrometer for feeding an infant.

The invention also concerns a liquid infant milk formula comprising vegetable fat, carbohydrate and protein, comprising 15 to less than 50 wt.% fat droplets with a diameter of 5-25 micrometer based on total weight of fat.

In a further aspect the present invention concerns a container containing a single liquid composition, wherein:
a. said liquid composition has a volume of 20 to 300 ml;
b. said liquid composition comprises vegetable fat, protein and carbohydrate; and
c. wherein the concentration ratio of fat in the upper 10 volume% : lower 10 volume% of the liquid composition is above 1.

In other words, the invention concerns a container containing a single liquid composition as defined herein, wherein said liquid composition has a volume of 20 to 300 ml. Preferably the concentration ratio of fat in the upper 10 volume% : lower 10 volume% of the liquid composition is above 1.2.

### Fat gradient

The present invention provides a method for feeding an infant, comprising feeding a liquid composition, preferably to an infant, wherein the liquid composition has a fat gradient. Particularly, the concentration ratio of fat in the upper 10 volume% : lower 10 volume% of the liquid composition is above 1, preferably above 1.2, preferably at least 1.5, more preferably at least 1.7. Preferably, the concentration ratio of fat in the upper 10 volume% : lower 10 volume% of the liquid composition is below 10, more preferably below 5, more preferably below 3.

The above mentioned concentration ratio in the liquid composition is preferably established at the start of or during a feeding event. Preferably the above mentioned concentration ratio is established at the start of a feeding event in a total volume of at least 30 ml, preferably at least 50 ml. Preferably, towards the end of the feeding event, i.e. when part of the liquid nutrition has been ingested, the concentration ratio will reduce.

Preferably the liquid composition is fed orally to the infant. The volume of the liquid formula fed to the infant is preferably between 50 and 300 ml, more preferably between 150 and 250 ml. Feeding such volumes preferably occurs several times per day. One volume is preferably administered in one feeding event. A feeding event usually has a duration between about 5 and 30 minutes.

The present invention also provides a container with a liquid composition comprising the fat gradient. Hence, the present invention relates to a container containing a single liquid composition, wherein said liquid composition has a volume of 20 to 300 ml, said liquid composition comprising vegetable fat, protein and carbohydrate; and wherein the concentration ratio of fat in the upper 10 volume%: lower 10 volume% of the liquid composition is above 1, preferably above 1.2.

The present container comprises a "single liquid", as opposed to the US 2006/0188614, wherein the container comprises two liquid compositions.

Particularly, the concentration ratio of fat in the upper 10 volume% : lower 10 volume% of the liquid composition is above 1, preferably above 1.2, preferably at least 1.5, more preferably at least 1.7. Preferably, the concentration ratio of fat in the upper 10 volume% : lower 10 volume% of the liquid composition is below 10, more preferably below 5, more preferably below 3.

Preferably, in the present liquid composition the concentration of fat in the upper 10 volume% is 4 to 7 g/100 ml and the concentration of fat in the lower 10 volume% is 1.5 to 3 g/100 ml.

### Fat droplet

The present composition preferably has a substantial content of fat droplets with a diameter of 5-25 micrometer, which preferably results in the formation of a fat gradient. Preferably the present composition comprises at least 15 wt.% to less than 50 wt.% fat droplets with a diameter of 5-25 micrometer based on total weight of fat, preferably at least 25 wt.%, based on total weight of fat. The present composition comprises less than 50 wt.% fat droplets with a diameter of 5-25 micrometer based on total weight of fat. More preferably the present composition comprises at least 15 wt.% fat droplets with a diameter of 5-10 micrometer based on total weight of fat, preferably at least 25 wt.%.

Fat droplet diameter can for example be determined using the method as described in Michalski et al., 2005 (J. Dairy Sci. 88:1927-1940). Also the size distribution can be determined by this method.

### Process for obtaining fat droplets resulting in a fat gradient.

The present composition comprises fat droplets. The fat droplets size can be manipulated by adjusting process steps by which the present composition is manufactured. A suitable and preferred way to obtain larger fat droplet sizes is to adapt the process of homogenization. In standard infant milk formula the lipid fraction (usually comprising vegetable fat, a small amount of polar lipids and fat soluble vitamins) is mixed into the aqueous fraction (usually comprising water, skimmed milk, whey, digestible carbohydrates such as lactose, water soluble vitamins and minerals and optionally non-digestible carbohydrates) by homogenization. If no homogenization was to take place, the lipid part would cream, i.e. separate from the aqueous part and collect at the top, too quickly or too a too large extent. Homogenization is the process of breaking up the fat phase into smaller sizes so that it no longer quickly separates from the aqueous phase but is maintained in a stable emulsion. This is accomplished by forcing the milk at high pressure through small orifices.

The process comprises the following steps:

### 1 Mixing ingredients

The ingredients of the composition are mixed, preferably blended. Basically a lipid phase, comprising the vegetable lipids, and an aqueous phase are added together. The ingredients of the aqueous phase may comprise water, skimmed milk (powder), whey (powder), low fat milk, lactose, water soluble vitamins and minerals. Preferably the lipid phase comprises at least 25 wt.% vegetable lipids based on total weight of the lipid phase.

The aqueous and lipid phase are preferably heated before adding together, preferably at a temperature of 40 °C to 80 °C. The mixture is also kept at this temperature and blended. A suitable way for blending is using an Ultra-Turrax T50 for about 30 - 60 s at 5000 - 10000 rpm. Subsequently demi-water may be added to this blend, to obtain the desired dry matter %. A desired dry matter % is for example 15%. Alternatively, the lipid phase is injected to the aqueous phase immediately prior to homogenization.

Minerals, vitamins, and stabilizing gums may be added at various points in the process depending on their sensitivity to heat. Mixing can for instance be performed with a high shear agitator.

### 2 Pasteurization

Preferably the mixture is then pasteurized. Pasteurization involves a quick heating step under controlled conditions which microorganisms cannot survive. A temperature of 60 to 80° C, more preferably 65 to 75 °C, held for at least 15 s, usually adequately reduces vegetative cells of microorganisms. Several pasteurization methods are known and commercially feasible. Alternatively this step can also be performed before mixing as in step 1 and/or be replaced by the heating step to 60 °C in step 1.

### 3 Sterilization

Subsequently, the emulsion obtained in step 2 is preferably sterilized. Preferably sterilization takes place in-line at ultra high temperature (UHT) and/or in appropriate containers to obtain a formula in the form of a sterile liquid. A suitable way for UHT treatment is a treatment at 120-130 °C for at least 20 s. Alternatively the emulsion obtained in step 3 is concentrated by evaporation, subsequently sterilized at ultra high temperature and subsequently spray dried to give a spray dried powder which is filled into appropriate containers. Alternatively this sterilization step is performed after the homogenization step.

### 4 Homogenization

Subsequently the optionally pasteurized mixture is homogenized. Homogenization is a process which increases emulsion uniformity and stability by reducing the size of the fat droplets in the formula. This process step can be performed with a variety of mixing equipment, which applies high shear to the product. This type of mixing breaks the fat droplets into smaller droplets. The mixture obtained is preferably homogenized in two steps at high temperature and low pressure, for example 60° C at 0 to 100 and 0 to 50 bar respectively, with a total pressure of 35 to 150 bar. Alternatively, the mixture obtained is preferably homogenized in two steps at a lower temperature, between 15 and 40 °C, preferably about 20° C at 0 to 50 and 5 to 50 bar respectively, with a total pressure of 5 to 100 bar. Alternatively a single homogenization step with a pressure of 20 to 100 bar, more preferably 25-50 bar is performed.

The pressures applied during the homogenization step are remarkably lower than standard pressures, which typically are 200-250 and 50 bar, respectively, so a total pressure of 250-300 bar, while the standard conventional process and present process for obtaining fat droplets resulting in a fat gradient, are otherwise essentially the same.

It will be dependent on the specific homogenizer used, which pressure to apply. A suitable way is to use a pressure of 0 bar in the first step and 2- to 30 bar in the second step in a Niro Suavi NS 2006 H Homogenizer at a temperature of 20 °C. Subsequently optionally other ingredients, not being lipid, may be added.

Preferably the composition obtained is spray dried afterwards.

### Liquid composition

The present composition contains vegetable fat preferably at least one selected from the group consisting of sunflower oil, soybean oil, rapeseed oil, palm oil and canola oils. The present liquid composition preferably comprises at least 25 % vegetable fat based on the total weight of fat in the composition, preferably at least 50 wt.%, more preferably at least 75 wt.% based on the total weight of fat in the composition. The present composition is not a (naturally occurring) mammalian milk, i.e. is not breast milk. The carbohydrate in the present composition preferably contains lactose. Preferably the present composition is an infant formula.

The present liquid composition preferably has a total energy density (total energy content/total volume) between 50 and 200 kcal/100 ml, preferably between 60 and 80 kcal/100 ml.

Preferably in the composition the fat provides 5 to 50% of the total calories, the protein provides 5 to 50% of the total calories, the carbohydrate provides 15 to 90% of the total calories. Preferably, in the present composition the fat provides 35 to 50% of the total calories, the protein provides 7.5 to 12.5% of the total calories, and the carbohydrate provides 40 to 55% of the total calories. For calculation of the % of total calories for the protein component, the total of energy provided by the proteins, peptides and amino acids needs to be taken into account.
Preferably, the present liquid composition has an osmolality between 50 and 500 mOsm/kg, more preferably between 100 and 400 mOsm/kg.

### Powder

The present invention provides a powder composition which, after reconstitution with water, provides a liquid composition with a fat gradient as described hereinabove. Hence, the present invention relates to a powder comprising vegetable fat, and preferably protein and carbohydrate, suitable for making a liquid composition wherein the concentration ratio of fat in the upper 10 volume% : lower 10 volume% of the liquid composition is above 1, preferably above 1.2.

The present invention provides a powder composition which, after reconstitution with water, provides a liquid composition with a fat droplet size as described hereinabove. Hence, the present invention provides a powder comprising vegetable fat, and preferably protein and carbohydrate, suitable for making a liquid composition, wherein, preferably after reconstitution with water, at least 15 wt.% to less than 50 wt.% of the total amount of fat droplets have a diameter of 5-25 micrometer.

### Use and production

The present invention particularly aims to mimic the concentration differences in fat which occur when an infant is breastfed. The present liquid composition is preferably administered to an infant with the age between 0 and 24 months, preferably with the age between 0 and 12 months, more preferably with the age between 0 and 6 months.

Preferably before administration of the liquid composition, the container containing the liquid is shaken so that the contents are mixed, the teat of the bottle is place in the mouth of the infant and the fat gradient is formed while the infant ingests the liquid composition. If the present composition is prepared from a powder composition, the fat gradient as described above is preferably formed within 5 to 30 minutes.

Preferably the fat gradient in the infant nutrition is prepared in the single container by pouring the liquid infant formula with the larger droplets in a single container with a total volume of 20 to 300 ml and leaving it undisturbed for at least 5 minutes, more preferably at least 10 minutes, even more preferably at least 20 minutes, most preferable at least 30 minutes which preferably allows the fat gradient to be formed. When feeding an infant with this bottle, the bottle should be handled with care and not be shaken too much in order to not disturb the fat gradient.

Thus the invention conerns a process of preparing a liquid nutritional composition as defined herein, comprising the steps of:
a) preparing a liquid nutritional composition comprising vegetable fat, carbohydrate and protein, comprising at least 15 wt.% to less than 50 wt.% fat droplets with a diameter of 5-25 micrometer based on total weight of fat; and in case a powder is used for preparing the liquid composition, said powder is reconstituted with preferably water;
b) pouring the liquid nutritional composition obtained under step a in a single container with a total volume of 20 to 300 ml;
c) leaving the liquid nutritional composition obtained in step b undisturbed for at least 5 minutes, preferably for at least 10 min minutes.
Preferably the concentration ratio of fat in the upper 10 volume% : lower 10 volume% of the liquid composition is above 1.2.

In a further embodiment the invention concerns the use of the liquid infant milk formula obtained by the process described above for the preparation for a composition for feeding an infant. Preferably the concentration ratio of fat in the upper 10 volume% : lower 10 volume% of the liquid composition is above 1.2.

Method or powder or process or use according to any one of the preceding claims, wherein the concentration ratio of fat in the upper 10 volume%: lower 10 volume% of the liquid composition is above 1.2.
The present composition is preferably produced using conventional infant formula manufacturing processes, making an adaptation to the intensity of homogenisation when the vegetable fat is added to the liquid. Subsequently the liquid can either be directly used (optionally after further dilution) or spray dried into a powder.

### EXAMPLES

### Example 1: Process for preparing an IMF with larger fat droplet size

An infant formula was prepared comprising per kg powder 5011 kcal, 263 g fat, 549 g carbohydrates, 30 g fibers and 102 g protein. The composition was prepared using a vegetable fat in the form of an oil blend, whey protein powder, lactose, non-digestible oligosaccharides (galacto-oligosaccharides and long-chain fructo-oligosaccharides in a weight ratio of 9/1). Also vitamins, minerals, trace elements as known in the art were used. Galacto-oligosaccharides, proteins, lactose, vitamins and minerals were premixed and were dissolved in water. Consequently, sodium hydroxide was added resulting in a pH of 6.7-7.0. The dry weight of the mixture was about 20%. The oil blend was prepared using vegetable oils, oil soluble vitamins and antioxidants. Both the water phase and the oil blend were heated to 65°C prior to mixing. The oil blend was added to the water phase and blended with an Ultra-Turrax T50 for about 30-60s at 5000-1000 rpm. The dry weight of this mixture was about 26%. The product was UHT treated for 30 s at 125 °C and subsequently cooled to 20 °C. This mixture was homogenized in two steps at a pressure of 0 and 20 bar respectively in a Niro Suavi NS 2006 H homogenizer. The product was dried to a powder by spray drying. Long chain inulin was blended dry into the powder.

The size of the fat droplets was measured with a Mastersizer 20000 (Malvern Instruments, Malvern UK). The amount of fat droplets with a size between 5 and 25 m was about 40% based on total fat.
As a control the fat droplets of a standard infant formula (such as Nutrilon 1) comprised fat droplets with a size between 5 and 25 m in an amount of about 4 % based on total fat. This IMF was prepared as described above, except that the homogenization pressure was 200 and 50 bar.

### Example 2: Fat gradient.

The standard and experimental IMF of example 1 each were poured in a funnel and left to stand for 30 minutes at room temperature. The IMF was poured out of the funnel and the lower 10% volume, the intermediate 10-90 % volume and the upper 10% volume was collected. The fat content was determined according to Rose Gottlieb (International Dairy Federation. 1987. Milk: Determination of fat content-Rose Gottlieb gravimetric method (reference method). IDF Standard FIL-IDF 1C:1987. Brussels, Belgium). The amount of fat in the upper 10 volume% was divided by the amount of fat in the lower 10 volume %. The results are shown in Table 1.

**Table 1: Fat gradient in IMF**

| Feeding | Ratio of fat concentration in upper and lower 10 volume % |
|---|---|
| Standard IMF | 1.0 |
| Experimental IMF | 1.8 |

### Example 3 kinetics of fat gradient formation

The experiment of example 2 was repeated, except that the fat content in upper and lower 10 volume% of the experimental formula with large lipid droplets was determined after standing for 10 minutes. The fat gradient formed was 1.4. This indicates that already after 10 minutes a fat gradient had been formed.

## Claims

1. Use of vegetable fat, protein and carbohydrate, for the preparation of a liquid infant milk formula wherein 15 to less than 50 wt.% of fat droplets have a diameter of 5-25 micrometer based on total weight of fat for feeding an infant.

2. The use according to claim 1, wherein the liquid infant milk formula has a total energy density between 50 and 200 kcal/100 ml.

3. The use according to any one of the preceding claims, wherein the concentration ratio of fat in the upper 10 volume% : lower 10 volume% of the liquid infant milk formula is above 1.

4. The use according to claim 3, wherein said concentration ratio of fat is established at the start of a feeding event in a total volume of at least 30 ml.

5. A container containing a single liquid infant milk formula according to any one of the preceding claims, wherein said liquid infant milk formula has a volume of 20 to 300 ml.

6. Process for preparing a liquid infant milk formula according to any one of claims 1 to 5, comprising the steps of:
(a) preparing a liquid nutritional composition comprising vegetable fat, carbohydrate and protein, comprising 15 to less than 50 wt.% fat droplets with a diameter of 5-25 micrometer based on total weight of fat;
(b) pouring the liquid nutritional composition obtained under step (a) in a single container with a total volume of 20 to 300 ml;
(c) leaving liquid nutritional composition obtained under step (b) undisturbed at least 5 minutes, preferably at least 10 minutes.

7. Use of the liquid infant milk formula obtained by the process according to claim 6 for the preparation of a composition for feeding an infant.

8. Liquid infant milk formula comprising vegetable fat, carbohydrate and protein, comprising 15 to less than 50 wt.% fat droplets with a diameter of 5-25 micrometer based on total weight of fat.

9. Powder comprising vegetable fat, protein and carbohydrate, suitable for making liquid infant milk formula, wherein 15 to less than 50 wt.% of the total amount of fat droplets have a diameter of 5-25 micrometer.

## Patentansprüche

1. Verwendung von Pflanzenfett, Protein und Kohlenhydrat zur Herstellung einer flüssigen Zusammensetzung für die Säuglingsernährung, worin 15 bis weniger als 50 Gew.-% der Fetttröpfchen, bezogen auf das Gesamtgewicht an Fett, zur Fütterung eines Säuglings einen Durchmesser von 5-25 Mikrometer haben.

2. Verwendung nach Anspruch 1, worin die flüssige Zusammensetzung für die Säuglingsernährung eine Gesamtenergiedichte zwischen 50 und 200 kcal/100 ml hat.

3. Verwendung nach einem der vorangehenden Ansprüche, worin das Konzentrationsverhältnis des Fettes in den oberen 10 Vol.-% zu den unteren 10 Vol.-% der flüssigen Zusammensetzung für die Säuglingsernährung über 1 ist.

4. Verwendung nach Anspruch 3, worin das Konzentrationsverhältnis des Fettes zu Beginn des Fütterungsvorgangs in einem Gesamtvolumen von mindestens 30 ml eingestellt ist.

5. Behälter enthaltend eine einzelne flüssige Zusammensetzung für die Säuglingsernährung nach einem der vorangehenden Ansprüche, worin die flüssige Zusammensetzung für die Säuglingsernährung ein Volumen von 20 bis 300 ml hat.

6. Verfahren zur Herstellung einer flüssigen Zusammensetzung für die Säuglingsernährung nach einem der Ansprüche 1 bis 6, umfassend die Schritte
a) Herstellung einer flüssigen Nahrungsmittelzusammensetzung umfassend Pflanzenfett, Kohlenhydrat und Protein, umfassend 15 bis weniger als 50 Gew.-% Fetttröpfchen mit einem Durchmesser von 5-25 Mikrometer bezogen auf das Gesamtgewicht an Fett,
b) Gießen der in Schritt a) erhaltenen flüssigen Nahrungsmittelzusammensetzung in einen Einzelbehälter mit einem Gesamtvolumen von 20 bis 300 ml,
c) ungestörtes Stehenlassen der in Schritt b) erhaltenen flüssigen Nahrungsmittelzusammensetzung für mindestens 5 min, vorzugsweise für mindestens 10 min.

7. Verwendung einer flüssigen Zusammensetzung für die Säuglingsernährung nach Anspruch 6 zur Herstellung einer Zusammensetzung zur Fütterung eines Säuglings.

8. Flüssige Zusammensetzung für die Säuglingsernährung umfassend Pflanzenfett, Kohlenhydrat und Protein, umfassend 15 bis weniger als 50 Gew.-% Fetttröpfchen, bezogen auf das Gesamtgewicht an Fett, mit einem Durchmesser von 5-25 Mikrometer.

9. Pulver umfassend Pflanzenfett, Protein und Kohlenhydrat, verwendbar zur Zubereitung einer flüssigen Zusammensetzung für die Säuglingsernährung, worin 15 bis weniger als 50 Gew.-% der Gesamtmenge an Fetttröpfchen einen Durchmesser von 5-25 Mikrometern haben.

## Revendications

1. Utilisation de graisses végétales, de protéines et de glucides, pour la préparation d'une formule de lait liquide pour nourrissons dans laquelle 15 à moins de 50 % en poids des gouttelettes de matière grasse ont un diamètre de 5-25 micromètres par rapport au poids total de la matière grasse pour l'alimentation d'un nourrisson.

2. Utilisation selon la revendication 1, dans laquelle la formule de lait liquide pour nourrissons a une densité énergétique totale comprise entre 50 et 200 kcal/100 ml.

3. Utilisation selon l'une quelconque des revendications précédentes, dans laquelle le rapport de concentration de la matière grasse dans les 10 % en volume supérieurs/dans les 10 % en volume inférieurs de la formule de lait liquide pour nourrissons est supérieur à 1.

4. Utilisation selon la revendication 3, dans laquelle ledit rapport de concentration de la matière grasse est défini au début d'un épisode d'alimentation dans un volume total d'au moins 30 ml.

5. Récipient contenant une formule de lait liquide unique pour nourrissons selon l'une quelconque des revendications précédentes, dans lequel ladite formule de lait liquide pour nourrissons a un volume de 20 à 300 ml.

6. Procédé de préparation d'une formule de lait liquide pour nourrissons selon l'une quelconque des revendications 1 à 6, comprenant les étapes consistant à :
a. préparer une composition nutritionnelle liquide comprenant des graisses végétales, des protéines et des glucides, comprenant 15 à moins de 50 % en poids de gouttelettes de matière grasse ayant un diamètre de 5-25 micromètres par rapport au poids total de la matière grasse ;
b. verser la composition nutritionnelle liquide obtenue dans l'étape a dans un récipient unique ayant un volume total de 20 à 300 ml ;
c. laisser la composition nutritionnelle liquide obtenue dans l'étape b au repos pendant au moins 5 minutes, de préférence au moins 10 minutes.

7. Utilisation de la formule de lait liquide pour nourrissons obtenue par le procédé selon la revendication 6 pour la préparation d'une composition pour l'alimentation d'un nourrisson.

8. Formule de lait liquide pour nourrissons comprenant des graisses végétales, des protéines et des glucides, comprenant 15 à moins de 50 % en poids de gouttelettes de matière grasse ayant un diamètre de 5-25 micromètres par rapport au poids total de la matière grasse.

9. Poudre comprenant des graisses végétales, des protéines et des glucides, permettant de préparer une formule de lait liquide pour nourrissons, dans laquelle 15 à moins de 50 % en poids de la quantité totale des gouttelettes de matière grasse ont un diamètre de 5 à 25 micromètres.
